# EUROPEAN PATENT APPLICATION

(11) **EP 4 586 445 A1**
(43) Date of publication of application: **16.07.2025**
(21) Application number: 23862257.5
(22) Date of filing: 31.08.2023
(51) Int. Cl.: H02J 7/00

(54) **ELECTRONIC DEVICE, CHARGING DEVICE, AND CHARGING CONTROL METHOD**

(30) Priority: 07.09.2022 CN 202211087889
(71) Applicant: Vivo Mobile Communication Co., Ltd., Dongguan, Guangdong 523863 (CN)
(72) Inventor: JING, Huaijiang, Dongguan, Guangdong 523863 (CN)
(74) Representative: Conti, Marco
(86) International application number: PCT/CN2023/116028
(87) International publication number: WO 2024/051563

(57) **Abstract**

This application discloses an electronic device, a charging device, and a charging control method, and relates to the field of charging control. The electronic device includes: a first interface, configured to connect to a second interface of the charging device; a battery, connected to the first interface; a sending module, connected to the first interface; and a processor, separately connected to the battery and the sending module, and configured to detect a status of the battery and/or send a charging request message to the charging device through the sending module.

## Description

### CROSS-REFERENCE TO RELATED APPLICATIONS

This application claims priority to Chinese Patent Application No. 202211087889.2 filed on September 07, 2022, which is incorporated herein by reference in its entirety.

### TECHNICAL FIELD

This application relates to the field of communication technologies, and specifically, to an electronic device, a charging device, and a charging control method.

### BACKGROUND

Most mobile devices are charged by using a universal serial bus (Universal Serial Bus, USB) or a Type C cable through a power adapter, and a charging process is controlled by a built-in charging management chip of the mobile device. Because there is a loss in power conversion efficiency between an input and an output of the charging management chip, a large amount of heat is generated during charging. Consequently, user experience and product life are affected, and even safety accidents are caused. In addition, as functions of the mobile devices become increasingly diversified and sizes of the mobile devices become increasingly miniaturized, a printed circuit board (Printed Circuit Board, PCB) of the mobile device reserves less space for the charging management chip, and a heating problem caused by charging becomes increasingly severe.

### SUMMARY

An objective of embodiments of this application is to provide an electronic device, a charging device, and a charging control method, to resolve a problem of severe heating during charging of an existing electronic device.

To resolve the foregoing technical problem, this application is implemented as follows.

According to a first aspect, an embodiment of this application provides an electronic device, including:
a first interface, configured to connect to a second interface of a charging device;
a battery, connected to the first interface;
a sending module, connected to the first interface; and
a processor, separately connected to the battery and the sending module, and configured to detect a status of the battery and/or send a charging request message to the charging device through the sending module.

According to a second aspect, an embodiment of this application provides a charging device, including:
a second interface, configured to connect to a first interface of an electronic device;
a receiving module, connected to the second interface;
a current regulating module, connected to the second interface;
a voltage regulating module, connected to the current regulating module; and
a control module, separately connected to the receiving module, the current regulating module, and the voltage regulating module, where the control module is configured: receive, through the receiving module, a charging request message sent by the electronic device, control, based on the charging request message, the current regulating module to regulate an output current, and/or control, based on the charging request message, the voltage regulating module to regulate an output voltage.

According to a third aspect, an embodiment of this application provides a charging control method, applied to the foregoing electronic device. The method includes:
obtaining a status of a battery; and
sending a charging request message to a charging device, where
the charging request message includes at least one of the following: the status of the battery, voltage requirement information, and current requirement information.

According to a fourth aspect, an embodiment of this application provides a charging control method, applied to the charging device. The method includes:
receiving a charging request message sent by an electronic device; and
regulating an output voltage and/or an output current based on the charging request message, where
the charging request message includes at least one of the following: a status of a battery, voltage requirement information, and current requirement information.

According to a fifth aspect, an embodiment of this application provides a charging control apparatus, including:
an obtaining module, configured to obtain a status of a battery; and
an information sending module, configured to send a charging request message to a charging device, where
the charging request message includes at least one of the following: the status of the battery, voltage requirement information, and current requirement information.

According to a sixth aspect, an embodiment of this application provides a charging control apparatus, including:
an information receiving module, configured to receive a charging request message sent by an electronic device; and
a processing module, configured to regulate an output voltage and/or an output current based on the charging request message, where
the charging request message includes at least one of the following: a status of a battery, voltage requirement information, and current requirement information.

According to a seventh aspect, an embodiment of this application provides an electronic device. The electronic device includes a processor, a memory, and a program or instructions that are stored in the memory and that can be run on the processor. When the program or the instructions are executed by the processor, the steps of the method according to the third aspect are implemented.

According to an eighth aspect, an embodiment of this application provides a charging device. The electronic device includes a processor, a memory, and a program or instructions that are stored in the memory and that can be run on the processor. When the program or the instructions are executed by the processor, the steps of the method according to the fourth aspect are implemented.

According to a ninth aspect, an embodiment of this application provides a readable storage medium. The readable storage medium stores a program or instructions. When the program or the instructions are executed by a processor, the steps of the method according to the third aspect are implemented, or the steps of the method according to the fourth aspect are implemented.

According to a tenth aspect, an embodiment of this application further provides a chip. The chip includes a processor and a communication interface. The communication interface is coupled to the processor. The processor is configured to run a program or instructions to implement the method according to the third aspect, or implement the method according to the fourth aspect.

According to an eleventh aspect, an embodiment of this application further provides a computer program product. The program product is stored in a storage medium, and the program product is executed by at least one processor to implement the method according to the third aspect, or implement the method according to the fourth aspect.

In the embodiments of this application, the electronic device can complete a charging process without disposing a charging management chip, which can avoid heating caused by the charging management chip, resolve a heating problem of the electronic device during charging, reduce device costs, and save internal space of the electronic device.

### BRIEF DESCRIPTION OF THE DRAWINGS

FIG. 1 is a first diagram of a structure of an electronic device and a charging device according to an embodiment of this application;
FIG. 2 is a second diagram of a structure of an electronic device and a charging device according to an embodiment of this application;
FIG. 3 is a first diagram of a structure of a modulation circuit according to an embodiment of this application;
FIG. 4 is a second diagram of a structure of a modulation circuit according to an embodiment of this application;
FIG. 5 is a diagram of a structure of a demodulation circuit according to an embodiment of this application;
FIG. 6 is a first schematic flowchart of a charging control method according to an embodiment of this application;
FIG. 7 is a second schematic flowchart of a charging control method according to an embodiment of this application;
FIG. 8 is a first diagram of a structure of a charging control apparatus according to an embodiment of this application;
FIG. 9 is a second diagram of a structure of a charging control apparatus according to an embodiment of this application;
FIG. 10 is a first diagram of a structure of an electronic device according to an embodiment of this application; and
FIG. 11 is a second diagram of a structure of an electronic device according to an embodiment of this application.

List of Reference Numerals: 1-first interface; 2-battery; 3-sending module; 4-processor; 5-second interface; 6-receiving module; 7-current regulating module; 8-voltage regulating module; 9-control module; 31-modulation circuit; 32-first capacitor; 311-logic control unit; 312-first resistor; 313-second resistor; 314-second capacitor; 315-third resistor; 316-first transistor; 61-demodulation circuit; 62-third capacitor; 611-second transistor; 612-fourth capacitor; 613-fourth resistor; and 614-comparator.

### DETAILED DESCRIPTION

The following clearly and completely describes the technical solutions in embodiments of this application with reference to the accompanying drawings in embodiments of this application. It is clear that described embodiments are only some of embodiments of this application rather than all of embodiments. All other embodiments obtained by a person of ordinary skill in the art based on embodiments of this application without creative efforts shall fall within the protection scope of this application.

Features of terms "first" and "second" in the specification and claims of this application may explicitly or implicitly include one or more of the features. In the descriptions of the present invention unless otherwise stated, "a plurality of" means two or more than two. In addition, "and/or" in the specification and the claims represents at least one of connected objects, and the character "/" generally represents an "or" relationship between associated objects.

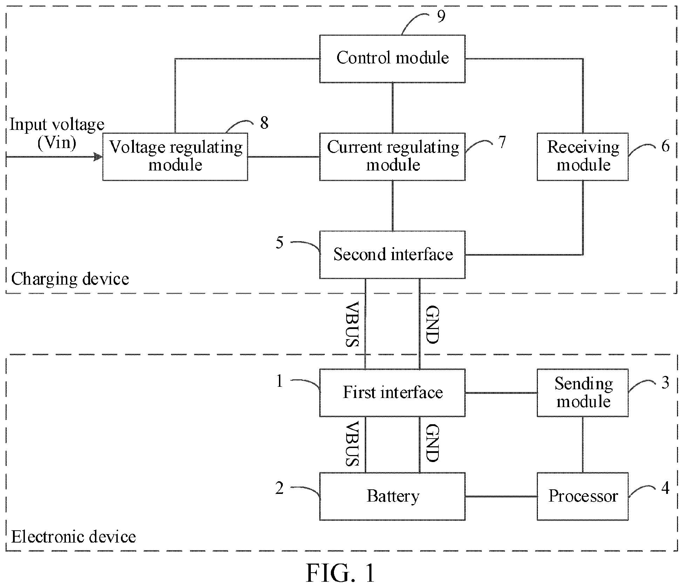

As shown in FIG. 1, an embodiment of this application provides an electronic device, including:
a first interface 1, configured to connect to a second interface of a charging device;
a battery 2, connected to the first interface 1;
a sending module 3, connected to the first interface 1; and
a processor 4, separately connected to the battery 2 and the sending module 3, and configured to detect a status of the battery 2 and/or send a charging request message to the charging device through the sending module 3.

In this embodiment, the first interface 1 may be a charging interface of the electronic device, and is configured to connect to the second interface of the charging device. When the first interface 1 is connected to the second interface, the charging device charges the electronic device. The battery 2 is connected to the first interface 1, and the charging device charges the battery 2 of the electronic device through the first interface 1 and the second interface.

The first interface 1 may further be configured to transmit information with the charging device. The sending module 3 is configured to send information to the charging device. The sending module 3 is connected to the first interface 1, and transmit the information to the second interface of the charging device through the first interface 1. The charging device may be a charging adapter.

The processor 4 is connected to the battery 2, and may obtain a state of charge of the battery 2, to determine a charging occasion, a charging state, and the like. For example, when the charging device charges the electronic device, if the state of charge of the battery 2 reaches a maximum allowed value, that is, the state of charge is full, stopping charging information may be sent to the charging device, and/or the processor 4 determines, by detecting the status of the battery 2, a voltage, a current, and the like that are required for charging, to send the corresponding charging request message to the charging device.

The processor 4 is further connected to the sending module 4. When sending the information to the charging device, the processor 4 needs to send the information to the sending module 4. The sending module 4 sends the information to the charging device through the first interface 1 after converting the information.

Optionally, the sending module 3 may perform signal modulation and conversion on inputted information, for example, modulate the inputted information, so that the information can be sent in a manner suitable for direct current communication. The second interface of the charging device receives the information, and transmits the information to a receiving module. The receiving module performs demodulation to obtain information that can be recognized by a control module of the charging device, and transmits demodulated information to the control module. The control module may regulate, based on information content obtained through parsing, a voltage and/or a current outputted to the electronic device. The control module is disposed on a charging device side, and the control module may be a charging control chip. To be specific, the charging control chip is disposed on the charging device side, and the charging control chip is not disposed in the electronic device (for example, a terminal), so that heating of the electronic device can be effectively reduced or even avoided.

In this embodiment of this application, the electronic device can complete a charging process without disposing a charging management chip, which can avoid heating caused by the charging management chip, resolve a heating problem of the electronic device during charging, reduce device costs, and save internal space of the electronic device.

In an optional embodiment, the sending module 3 includes a modulation circuit 31 and a first capacitor 32, where an input end of the modulation circuit 31 is connected to the processor 4, an output end of the modulation circuit 31 is connected to the first capacitor 32, the first capacitor 32 is connected to the first interface 1, and the modulation circuit 31 is configured to perform direct current conversion on an inputted charging request message.

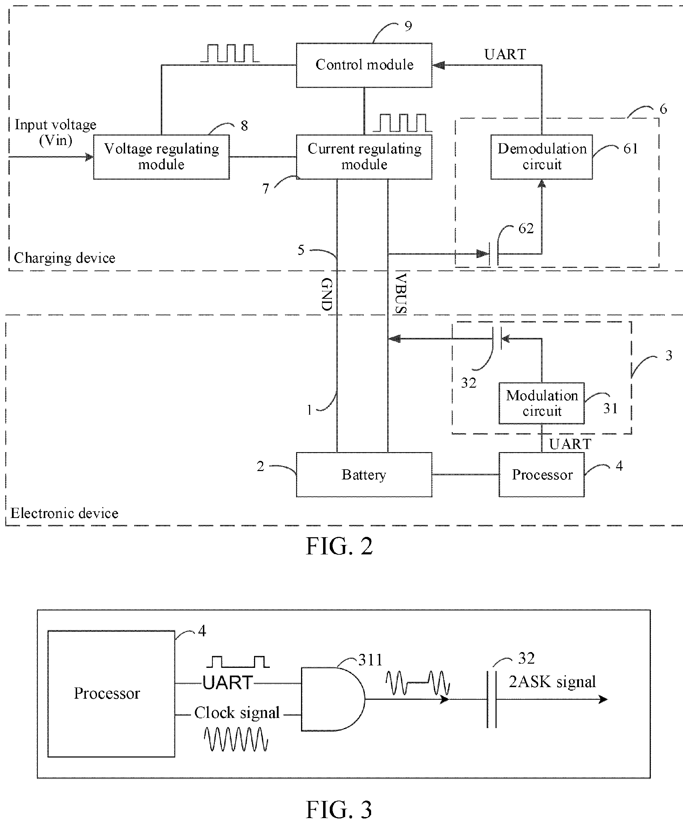

In this embodiment, as shown in FIG. 2, the sending module 3 includes the modulation circuit 31 and the first capacitor 32, configured to implement direct current conversion on inputted information. Optionally, the modulation circuit 31 may be a binary amplitude shift keying (2 Amplitude shift keying, 2ASK) modulation circuit, or may be a frequency-shift keying (Frequency-shift keying, FSK) modulation circuit, a frequency modulation circuit, or an amplitude modulation circuit. Optionally, the processor 4 includes a universal asynchronous receiver/transmitter (Universal Asynchronous Receiver/Transmitter, UART) interface, or may be a general purpose input/output port (General Purpose I/O Port, GPIO). The charging request message generated by the processor 4 is sent to the 2ASK modulation circuit through the commonly used interface UART. The 2ASK modulation circuit converts the charging request message into a signal suitable for transmission on a direct current line. The signal is coupled to the first interface 1 through the first capacitor 32, and the first interface 1 sends a modulated charging request message to the charging device. The receiving module of the charging device includes a demodulation circuit. The charging request message is demodulated by the demodulation circuit, and then a demodulated charging request message is sent to the control module of the charging device. The control module controls and regulates an output voltage and/or current, to charge the electronic device.

In this embodiment of this application, the modulation circuit 31 may include a plurality of circuit forms, to implement direct current conversion on the information. An example is used for description below.

In an optional embodiment, the modulation circuit 31 includes a logic control unit 311.

An input end of the logic control unit 311 is connected to the processor 4, the input end of the logic control unit 311 inputs the charging request message and a clock signal, an output end of the logic control unit 311 is connected to the first capacitor 32, and the output end of the logic control unit 311 outputs a direct current conversion signal of the charging request message.

Optionally, the logic control unit 311 may be a logic AND gate, and the logic control unit 311 modulates the charging request message and the clock signal of the processor 4 together into a 2ASK signal suitable for direct current transmission. For example, the logic control unit 311 may be the logic AND gate. As shown in FIG. 3, the processor 4 outputs a charging request through the UART interface, and outputs the clock signal. The logic AND gate modulates the charging request and the clock signal, to obtain the 2ASK signal on which direct current transmission can be performed. A converted signal is coupled to the first interface 1 through the first capacitor 32, and the converted signal is transmitted to the charging device through the first interface 1.

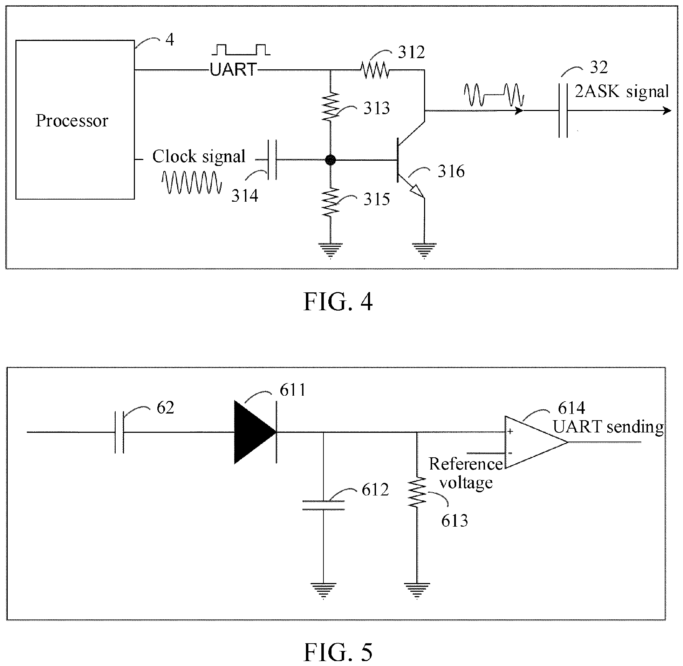

In another optional embodiment, as shown in FIG. 4, the modulation circuit 31 includes:
a first resistor 312, where a first end of the first resistor 312 is connected to the processor 4, and the first end of the first resistor 312 inputs the charging request message;
a second resistor 313, where a first end of the second resistor 313 is connected to the processor 4, and the first end of the second resistor 313 inputs the charging request message;
a second capacitor 314, where a first end of the second capacitor 314 is connected to the processor 4, and the first end of the second capacitor 314 inputs a clock signal;
a third resistor 315, where a first end of the third resistor 315 is connected to a second end of the second capacitor 314, and a second end of the third resistor 315 is grounded; and
a first transistor 316, where a first end of the first transistor 316 is connected to the second end of the second capacitor 314, is connected to a second end of the second resistor 313, and is connected to a first end of the third resistor 315, a second end of the first transistor 316 is connected to a second end of the first resistor 312 and outputs a direct current conversion signal of the charging request message to the first capacitor 32 at a junction, and a third end of the first transistor 316 is grounded.

**In** this embodiment, the clock signal outputted by the processor 4 is connected to the second capacitor 314, and the UART interface of the processor 4 is connected to the first end of the first resistor 312 and the first end of the second resistor 313. In this case, the charging request outputted through the UART interface is transmitted to the first resistor 312 and the second resistor 313.

The first end of the first transistor 316 is an end connected to the second end of the second resistor 313 and the first end of the third resistor 315 separately. The second end of the first transistor 316 is an end connected to the second end of the first resistor 312. The third end of the first transistor 316 is grounded. The first transistor 316 is controlled through a high and low level of the UART, so that the second end of the first transistor 316 outputs a modulated 2ASK signal, and the signal is coupled to the first interface 1 through the first capacitor 32. A modulated charging request is transmitted to the charging device through the first interface 1.

In this embodiment, the modulation circuit 31 may be a 2ASK modulation circuit. The 2ASK modulation circuit transmits the charging request message of the processor 4 of the electronic device to the demodulation circuit on the charging device side. The demodulation circuit may be a 2ASK demodulation circuit, and the 2ASK demodulation circuit transmits the charging request message to the control module on the charging device side. The control module regulates the output voltage and/or the output current of the charging device. Optionally, the electronic device and the charging device transmit information through two wires: a USB voltage (VBUS) and a wire ground (GND), that is, to-be-transmitted information (for example, the charging request message) is loaded into the VBUS for transmission. For example, as shown in FIG. 2, the first interface 1 on an electronic device side is connected to the second interface on the charging device side through the VBUS and the GND to carry and transmit the information. In this way, a cable design for information transmission can be simplified.

In this embodiment of this application, through direct current modulation, the charging request message of the processor is transmitted to the charging device through a direct current charging cable (such as the VBUS and the GND). The demodulation module of the charging device outputs a demodulation signal. The control module of the charging device parses the charging request message, and outputs a pulse width modulation (Pulse Width Modulation, PWM) signal to control the voltage regulating module to output a proper voltage and/or control the current regulating module to output a proper current. Therefore, according to this embodiment of this application, the charging control chip at the electronic device end can be omitted, so that the heating problem at the electronic device end caused by the charging management chip is resolved. In addition, a charging cable does not need an additional communication control cable. Therefore, implementation costs of an entire charging solution are further reduced. This embodiment of this application may be applied to mobile devices such as a mobile phone, earphones, and a watch.

In this embodiment of this application, the electronic device can complete the charging process without disposing the charging management chip, which can avoid heating caused by the charging management chip, resolve the heating problem of the electronic device during charging, reduce the device costs, and save the internal space of the electronic device.

As shown in FIG. 1, an embodiment of this application further provides a charging device, including:
a second interface 5, configured to connect to a first interface of an electronic device;
a receiving module 6, connected to the second interface 5;
a current regulating module 7, connected to the second interface 5;
a voltage regulating module 8, connected to the current regulating module 7; and
a control module 9, separately connected to the receiving module 6, the current regulating module 7, and the voltage regulating module 8, where the control module 9 is configured to: receive, through the receiving module 6, a charging request message sent by the electronic device, control, based on the charging request message, the current regulating module 7 to regulate an output current, and/or control, based on the charging request message, the voltage regulating module 8 to regulate an output voltage.

In this embodiment, the charging device is, for example, a charging adapter. The second interface 5 may be configured to output electric energy to the electronic device, and may be further configured to receive information transmitted by the electronic device. The receiving module 6 is configured to receive the information sent by the electronic device, for example, receive the charging request message sent by the electronic device. The receiving module 6 may convert received information, and obtain information that can be recognized by the control module 9. For example, the receiving module 6 receives the charging request message transmitted by the second interface 5, where the charging request message is a message suitable for direct current communication after being modulated by the electronic device. In this case, the receiving module 6 demodulates the charging request message, to obtain information content that can be recognized by the control module 9, and transmits the information content to the control module.

The control module 9 is connected to the current regulating module 7 and the voltage regulating module 8, and may determine, based on a parsed charging request message, a power amount, a voltage, a current, and the like that are required by the electronic device, to control the current regulating module 7 to output a proper current and/or control the voltage regulating module to output a proper voltage. The control module is disposed on a charging device side, and the control module may be a charging control chip. The charging control chip is disposed on the charging device side, and the charging control chip is not disposed in the electronic device, so that heating of the electronic device can be effectively reduced or even avoided.

In this embodiment of this application, the control module is disposed in the charging device, and the control module controls, based on the charging request message of the electronic device, the current regulating module to output the proper current, and/or controls, based on the charging request message of the electronic device, the voltage regulating module to output the proper voltage. Because the control module configured to regulate a voltage and/or a current is disposed on the charging device, and conversion of the voltage and/or the current is completed on the charging device, heating of the electronic device caused by a charging management chip can be avoided, device costs of the electronic device can be reduced, and internal space of the electronic device can be saved.

In an optional embodiment, the receiving module 6 includes:
a demodulation circuit 61 and a third capacitor 62.

One end of the third capacitor 62 is connected to the second interface 5, another end of the third capacitor 62 is connected to an input end of the demodulation circuit 61, an output end of the demodulation circuit 61 is connected to the control module 9, and the demodulation circuit 61 is configured to perform signal demodulation on an inputted charging request message.

In this embodiment, as shown in FIG. 2, the receiving module 6 includes the demodulation circuit 61 and the third capacitor 62, which are configured to implement demodulation and conversion on received information. Optionally, the demodulation circuit 61 may be a 2ASK demodulation circuit. For example, the sending module 3 of the electronic device couples a 2ASK signal (for example, a modulated charging request message) to the 2ASK demodulation circuit through the first capacitor 32, and the 2ASK demodulation circuit converts the 2ASK signal into a signal suitable for the control module 9 to receive, and sends the signal to the control module 9 through a UART interface.

As shown in FIG. 2, the control module 9 receives the charging request message of the processor 4 of the electronic device through the UART interface, the control module 9 may output a PWM signal to control the voltage regulating module 8 to output the proper voltage, and the control module 9 controls, by using the PWM signal, the current regulating module 7 to output the proper current.

In an optional embodiment, as shown in FIG. 5, the demodulation circuit 61 includes:
a second transistor 611, where an input end of the second transistor 611 is connected to the third capacitor 62;
a fourth capacitor 612, where a first end of the fourth capacitor 612 is connected to an output end of the second transistor 611, and a second end of the fourth capacitor 612 is grounded;
a fourth resistor 613, where a first end of the fourth resistor 613 is connected to the output end of the second transistor 611, and a second end of the fourth resistor 613 is grounded; and
a comparator 614, where a positive electrode of an input end of the comparator 614 is separately connected to the output end of the second transistor 611, the first end of the fourth resistor 613, and the first end of the fourth capacitor 612, a negative electrode of the input end of the comparator 614 is connected to a reference voltage, and an output end of the comparator 614 is connected to the control module 9.

In this embodiment, the input end of the second transistor 611 is connected to the third capacitor 62, the output end of the second transistor 611 is separately connected to the first end of the fourth capacitor 612 and the first end of the fourth resistor 613, and both the second end of the fourth capacitor 612 and the second end of the fourth resistor 613 are grounded. The output end of the second transistor 611 is further connected to the comparator 614. The second transistor 611 may be a diode.

As shown in FIG. 5, the first end of the third capacitor 62 is connected to a direct current charging cable of the second interface 5, so that the 2ASK signal can be coupled to an anode of the second transistor 611 (that is, the diode). A cathode of the second transistor 611, the fourth capacitor 612, and the fourth resistor 613 form an envelope-demodulation detector of the 2ASK signal, to implement envelope output of the 2ASK signal.

The positive (+) electrode of the input end of the comparator 614 is connected to the cathode of the second transistor 611, the first end of the fourth capacitor 612, and the first end of the fourth resistor 613. The negative (-) electrode of the input end of the comparator 614 is connected to the reference voltage. A value of an envelope signal outputted by the cathode of the second transistor 611 is compared with a value of the reference voltage, to demodulate the 2ASK signal (for example, the charging request message), and a demodulated UART signal is outputted to the control module 9.

In this embodiment, the modulation circuit on the charging device side may be a 2ASK modulation circuit. The 2ASK modulation circuit transmits the charging request message of the processor of the electronic device to the demodulation circuit 61 on the charging device side. The demodulation circuit 61 may be a 2ASK demodulation circuit, and the 2ASK demodulation circuit transmits the charging request message to the control module 9. The control module 9 regulates an output voltage and/or an output current of the charging device. Optionally, the electronic device and the charging device transmit information through two wires: a VBUS and a GND, that is, load to-be-transmitted information into the VBUS for transmission. For example, as shown in FIG. 2, the first interface 1 on an electronic device side is connected to the second interface 5 on the charging device side through the VBUS and the GND to carry and transmit the information. In this way, a cable design for information transmission can be simplified.

In this embodiment of this application, in a manner of 2ASK modulation, the charging request message of the processor of the electronic device is transmitted to the 2ASK demodulation module (that is, the receiving module) through the direct current charging cable. The control module parses the charging request message of the processor through the UART signal outputted by the 2ASK demodulation module, and outputs the PWM signal to control the voltage regulating module to output a proper voltage and/or control the current regulating module to output a proper current. Therefore, in this embodiment of this application, the charging control chip of the electronic device can be omitted, to avoid a heating problem of the electronic device caused by the charging management chip. In addition, the charging cable does not need an additional communication control cable. Therefore, implementation costs of an entire charging solution are further reduced. This embodiment of this application may be applied to mobile devices such as a mobile phone, earphones, and a watch.

The following describes a control process of charging an electronic device by using a charging device according to this embodiment of this application.

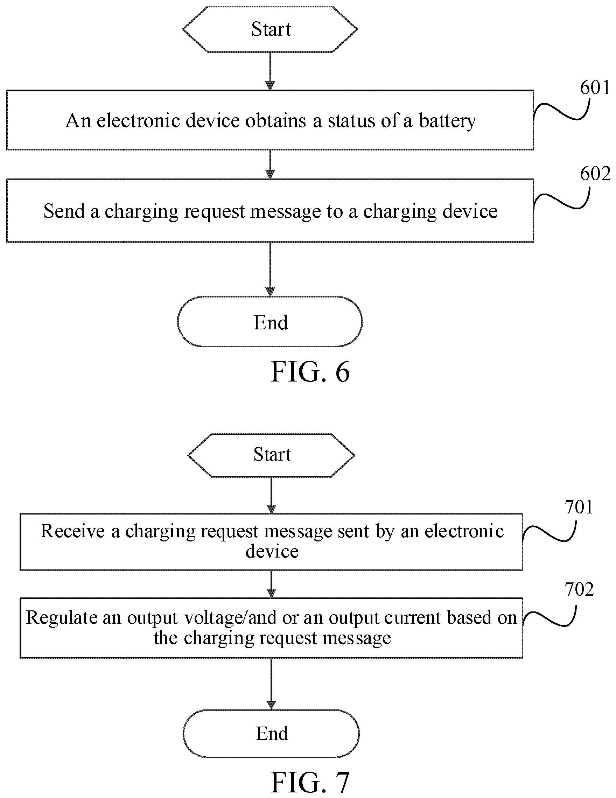

As shown in FIG. 6, an embodiment of this application provides a charging control method, applied to the foregoing electronic device. The method includes the following steps.

Step 601: Obtain a status of a battery.

Step 602: Send a charging request message to a charging device.

The charging request message includes at least one of the following: the status of the battery, voltage requirement information, and current requirement information.

Optionally, a processor of the electronic device obtains the status of the battery, and may determine information such as a charging occasion and a charging state based on the status of the battery. For example, when the charging device charges the electronic device, if a state of charge reaches a maximum allowed value, that is, the state of charge is full, stopping charging information may be sent to the charging device, and/or the processor of the electronic device detects the status of the battery to determine a voltage, a current, and the like that are required for charging, to send the corresponding charging request message to the charging device. The charging request message may include the status of the battery, a voltage requirement, a current requirement, and the like of the electronic device, so that the charging device regulates the voltage and/or the current outputted to the electronic device.

After receiving the charging request message, the charging device parses content of the charging request message, to regulate the current and/or the voltage outputted to the electronic device, that is, when the electronic device is charged, conversion of the current and/or the voltage is completed in the charging device. The electronic device can complete a charging process without disposing the charging management chip, which can avoid heating caused by a charging management chip, resolve a heating problem of the electronic device during charging, reduce device costs, and save internal space of the electronic device.

Optionally, before the sending a charging request message to the charging device, the method further includes:
generating the charging request message based on the status of the battery; and
modulating the charging request message, to obtain the charging request message obtained after direct current conversion.

The sending a charging request message to the charging device includes:
sending the charging request message obtained after direct current conversion to the charging device.

In this embodiment, the processor of the electronic device may determine, based on a detected battery status, a requirement such as the voltage and the current that need to be inputted, to generate the charging request message. A modulation circuit of the electronic device performs direct current conversion on the charging request message to convert the charging request message into a signal suitable for transmission on a direct current line, and sends the signal to the charging device. A control module that may be configured to regulate an output voltage and/or current is disposed in the charging device. The control module may be a charging control chip, that is, the charging control chip is disposed on a charging device side, so that heating of the electronic device can be effectively avoided. The charging device may demodulate the charging request message, control and regulate the output voltage and/or current based on parsed information content, to charge the electronic device.

In this embodiment of this application, the electronic device can complete the charging process without disposing the charging management chip, which can avoid heating caused by the charging management chip, resolve the heating problem of the electronic device during charging, reduce the device costs, and save the internal space of the electronic device.

As shown in FIG. 7, an embodiment of this application provides a charging control method, applied to the foregoing charging device. The method includes the following steps.

Step 701: Receive a charging request message sent by an electronic device.

Step 702: Regulate an output voltage and/or an output current based on the charging request message.

The charging request message includes at least one of the following: a status of a battery, voltage requirement information, and current requirement information.

In this embodiment, a receiving module of the charging device may receive the charging request message sent by the electronic device, and the charging request message may include the status of the battery, a voltage requirement, a current requirement, and the like of the electronic device. A control module of the charging device may regulate, based on a requirement of the electronic device, a voltage and/or current outputted to the electronic device.

Optionally, the regulating an output voltage and/or an output current based on the charging request message includes: parsing the charging request message, to obtain a charging requirement of the electronic device; and regulating the output voltage and/or the output current based on the charging requirement.

In this embodiment, the charging request message received by the charging device may be a message modulated by the electronic device, and the charging device may demodulate the charging request message through a demodulation circuit, to obtain information content that can be recognized by the control module. The control module of the charging device determines the charging requirement of the electronic device based on parsed information content, regulates the output current by controlling a current regulating module, and/or regulates the output voltage by controlling a voltage regulating module.

In this embodiment of this application, the control module that may be configured to regulate the output voltage and/or current is disposed in the charging device. The control module may be a charging control chip, that is, the charging control chip is disposed on a charging device side, so that heating of the electronic device can be effectively avoided. Based on the charging request message of the electronic device, the charging device controls the current regulating module to output a proper current, and/or controls the voltage regulating module to output a proper voltage. Because conversion of the voltage and/or the current is completed on the charging device, heating of the electronic device caused by the charging management chip can be avoided, device costs of the electronic device can be reduced, and internal space of the electronic device can be saved.

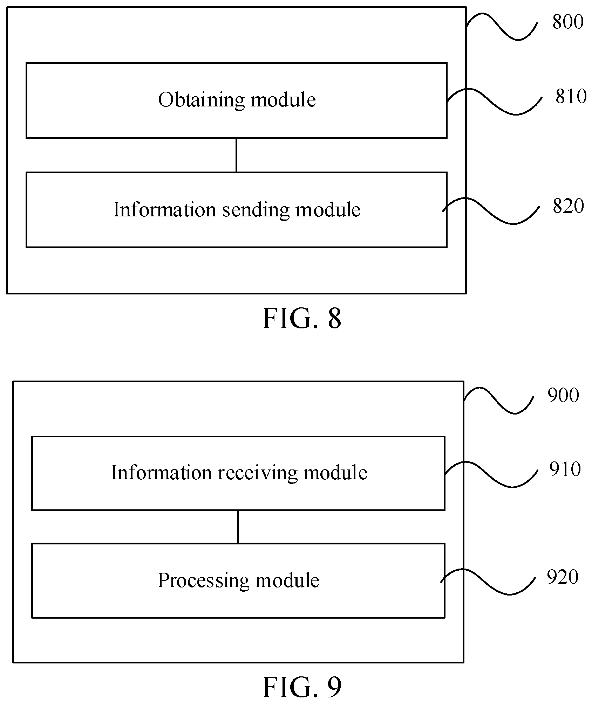

As shown in FIG. 8, an embodiment of this application further provides a charging control apparatus 800, applied to an electronic device. The apparatus includes:
an obtaining module 810, configured to obtain a status of a battery; and
an information sending module 820, configured to send a charging request message to a charging device, where
the charging request message includes at least one of the following: the status of the battery, voltage requirement information, and current requirement information.

Optionally, the apparatus further includes:
a generation module, configured to generate the charging request message based on the status of the battery; and
a modulation module, configured to modulate the charging request message, to obtain the charging request message obtained after direct current conversion.

The information sending module is specifically configured to send the charging request message obtained after direct current conversion to the charging device.

In this embodiment of this application, the electronic device is provided with the charging management chip to complete a charging process, which can avoid heating caused by the charging management chip, resolve a heating problem of the electronic device during charging, reduce device costs, and save internal space of the electronic device. A control module configured to regulate an output voltage and/or current is disposed in the charging device. The control module may be a charging control chip, that is, the charging control chip is disposed on a charging device side, so that heating of the electronic device can be effectively avoided.

As shown in FIG. 9, an embodiment of this application further provides a charging control apparatus 900, applied to a charging device. The apparatus includes:
an information receiving module 910, configured to receive a charging request message sent by an electronic device; and
a processing module 920, configured to regulate an output voltage and/or an output current based on the charging request message, where
the charging request message includes at least one of the following: a status of a battery, voltage requirement information, and current requirement information.

Optionally, the processing module 920 is specifically configured to:
parse the charging request message, to obtain a charging requirement of the electronic device; and
regulate the output voltage and/or the output current based on the charging requirement.

In this embodiment of this application, the control module that may be configured to regulate the output voltage and/or current is disposed in the charging device. The control module may be a charging control chip, that is, the charging control chip is disposed on a charging device side, so that heating of the electronic device can be effectively avoided. Based on the charging request message of the electronic device, the charging device controls a current regulating module to output a proper current, and/or controls a voltage regulating module to output a proper voltage. Because conversion of the voltage and/or the current is completed on the charging device, heating of the electronic device caused by the charging management chip can be avoided, device costs of the electronic device can be reduced, and internal space of the electronic device can be saved.

The charging control apparatus in this embodiment of this application may be an electronic device or a component in the electronic device, such as an integrated circuit or a chip. The electronic device may be a terminal, or may be a device other than a terminal. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like, or may be a server, a network attached storage (Network Attached Storage, NAS), a personal computer (personal computer, PC), a television (television, TV), a teller machine, a self-service machine, or the like. This is not specifically limited in embodiments of this application.

The charging control apparatus in the embodiments of this application may be an apparatus with an operating system. The operating system may be an Android (Android) operating system, an iOS operating system, or other possible operating systems. This is not specifically limited in the embodiments of this application.

The charging control apparatus provided in this embodiment of this application can implement the processes implemented by the charging control apparatus in the method embodiments in FIG. 6 and FIG. 7. To avoid repetition, details are not described herein again.

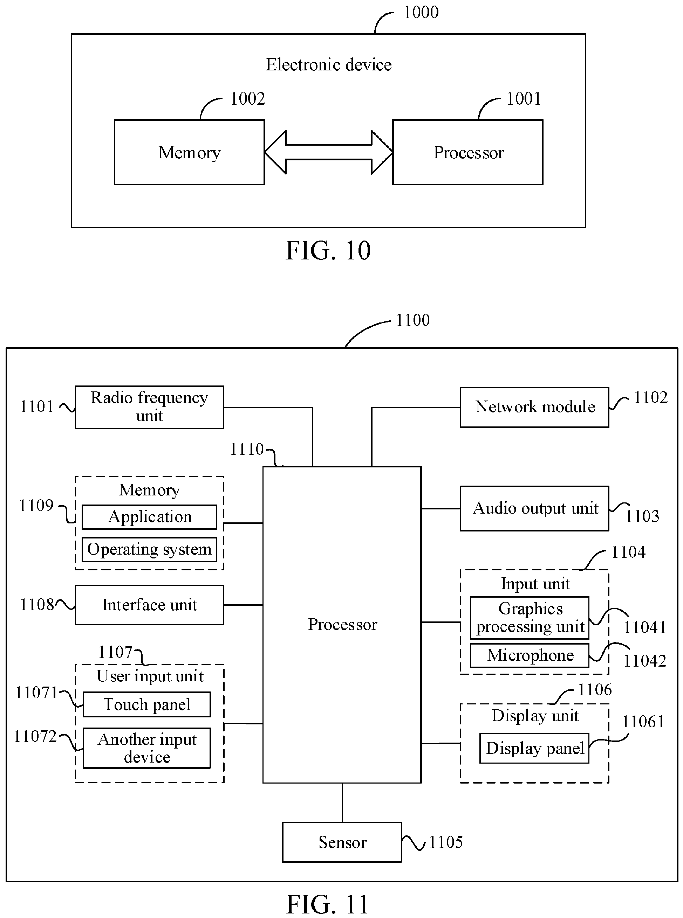

Optionally, as shown in FIG. 10, an embodiment of this application further provides an electronic device 1000, including a processor 1001, a memory 1002, and a program or instructions that are stored in the memory 1002 and that can be run on the processor 1001. When the program or the instructions are executed by the processor 1001, the processes of the embodiments of the charging control method are implemented, and a same technical effect can be achieved. To avoid repetition, details are not described herein again.

It should be noted that the electronic device in the embodiments of this application includes a mobile electronic device and a non-mobile electronic device described above.

FIG. 11 is a diagram of a hardware structure of an electronic device for implementing an embodiment of this application.

An electronic device 1100 includes, but is not limited to, components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the electronic device 1100 may further include a power supply (such as a battery) for supplying power to the components. The power supply may be logically connected to the processor 1110 through a power management system, to implement functions such as charging, discharging, and power consumption management through the power management system. The structure of the electronic device shown in FIG. 11 does not constitute a limitation on the electronic device, and the electronic device may include more or fewer components than those shown in the figure, or some components may be combined, or different component arrangements may be used. This is not described herein again.

The processor 1110 is configured to obtain a status of the battery.

The interface unit 1108 is configured to send a charging request message to a charging device.

Optionally, the processor 1110 is further configured to: generate the charging request message based on the status of the battery; and
modulate the charging request message, to obtain the charging request message obtained after direct current conversion.

The interface unit 1108 sends the charging request message obtained after direct current conversion to the charging device.

In this embodiment of this application, the electronic device can complete a charging process without disposing a charging management chip, which can avoid heating caused by the charging management chip, resolve a heating problem of the electronic device during charging, reduce device costs, and save internal space of the electronic device.

It should be understood that the input unit 1104 may include a graphics processing unit (Graphics Processing Unit, GPU) 11041 and a microphone 11042. The graphics processing unit 11041 performs processing on image data of a static picture or a video that is obtained by an image acquisition device (for example, a camera) in a video acquisition mode or an image acquisition mode. The display unit 1106 may include a display panel 11061, and the display panel 11061 may be configured by using a liquid crystal display, an organic light-emitting diode, or the like. The user input unit 1107 includes a touch panel 11071 and another input device 11072. The touch panel 11071 may also be referred to as a touchscreen. The touch panel 11071 may include two parts: a touch detection apparatus and a touch controller. The another input device 11072 may include, but is not limited to, a physical keyboard, a functional key (such as a volume control key or a switch key), a track ball, a mouse, and a joystick. This is not described herein again.

The memory 1109 may be configured to store a software program and various data. The memory 1109 may mainly include a first storage area that stores a program or instructions and a second storage area that stores data. The first storage area may store an operating system, an application or the instructions required by at least one function (for example, a sound playback function and an image display function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1109 in embodiments of this application includes, but is not limited to, the memories and any other memory of a suitable type.

The processor 1110 may include one or more processing units. Optionally, the processor 1110 may integrate an application processor and a modem processor. The application processor mainly processes an operation involving an operating system, a user interface, an application, and the like. The modem processor mainly processes a wireless communication signal, such as a baseband processor. It may be understood that the modem processor may alternatively not be integrated in the processor 1110.

An embodiment of this application further provides a readable storage medium. The readable storage medium stores a program or instructions. When the program or the instructions are executed by a processor, the processes of the charging control method are implemented, and a same technical effect can be achieved. To avoid repetition, details are not described herein again.

The processor may be a processor of the electronic device in the foregoing embodiments. The readable storage medium includes a computer-readable storage medium, for example, a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or instructions, to implement the processes of the charging control method embodiment, and a same technical effect can be achieved. To avoid repetition, details are not described herein again.

It should be understood that the chip mentioned in this embodiment of this application may also be referred to as a system chip, a chip system, a system on chip, or the like.

An embodiment of this application provides a computer program product. The program product is stored in a storage medium. The program product is executed by at least one processor to implement the processes of the charging control method embodiment, and a same technical effect can be achieved. To avoid repetition, details are not described herein again.

It should be noted that the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ...... " does not exclude that there are still other same elements in the processes, methods, objects, or apparatuses. In addition, it should be noted that a range of the method and the apparatus in embodiments of this application is not limited to perform a function in a sequence shown or discussed, and may further include performing the function based on a related function in a substantially same manner or in a reverse sequence. For example, the function may be performed in the sequence shown or discussed. The described method may be performed in a sequence different from the described method, and various steps may alternatively be added, omitted, or combined. In addition, features described with reference to examples may be combined in other examples.

Through the descriptions of the foregoing implementations, a person skilled in the art may clearly understand that the methods in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the current art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, a network device, or the like) to perform the methods described in embodiments of this application.

## Claims

1. An electronic device, comprising
a first interface, configured to connect to a second interface of a charging device;
a battery, connected to the first interface;
a sending module, connected to the first interface; and
a processor, separately connected to the battery and the sending module, and configured to detect a status of the battery and/or send a charging request message to the charging device through the sending module.

2. The electronic device according to claim 1, wherein the sending module comprises a modulation circuit and a first capacitor;
an input end of the modulation circuit is connected to the processor, an output end of the modulation circuit is connected to the first capacitor, and the first capacitor is connected to the first interface; and
the modulation circuit is configured to perform direct current conversion on an inputted charging request message.

3. The electronic device according to claim 2, wherein the modulation circuit comprises a logic control unit; and
an input end of the logic control unit is connected to the processor, the input end of the logic control unit inputs the charging request message and a clock signal, an output end of the logic control unit is connected to the first capacitor, and the output end of the logic control unit outputs a direct current conversion signal of the charging request message.

4. The electronic device according to claim 2, wherein the modulation circuit comprises:
a first resistor, wherein a first end of the first resistor is connected to the processor, and the first end of the first resistor inputs the charging request message;
a second resistor, wherein a first end of the second resistor is connected to the processor, and the first end of the second resistor inputs the charging request message;
a second capacitor, wherein a first end of the second capacitor is connected to the processor, and the first end of the second capacitor inputs a clock signal;
a third resistor, wherein a first end of the third resistor is connected to a second end of the second capacitor, and a second end of the third resistor is grounded; and
a first transistor, wherein a first end of the first transistor is connected to the second end of the second capacitor, is connected to a second end of the second resistor, and is connected to the first end of the third resistor, a second end of the first transistor is connected to a second end of the first resistor and outputs a direct current conversion signal of the charging request message to the first capacitor at a junction, and a third end of the first transistor is grounded.

5. A charging device, comprising:
a second interface, configured to connect to a first interface of an electronic device;
a receiving module, connected to the second interface;
a current regulating module, connected to the second interface;
a voltage regulating module, connected to the current regulating module; and
a control module, separately connected to the receiving module, the current regulating module, and the voltage regulating module, wherein the control module is configured to: receive, through the receiving module, a charging request message sent by the electronic device, control, based on the charging request message, the current regulating module to regulate an output current, and/or control, based on the charging request message, the voltage regulating module to regulate an output voltage.

6. The charging device according to claim 5, wherein the receiving module comprises:
a demodulation circuit and a third capacitor;
one end of the third capacitor is connected to the second interface, another end of the third capacitor is connected to an input end of the demodulation circuit, and an output end of the demodulation circuit is connected to the control module; and
the demodulation circuit is configured to perform signal demodulation on an inputted charging request message.

7. The charging device according to claim 6, wherein the demodulation circuit comprises:
a second transistor, wherein an input end of the second transistor is connected to the third capacitor;
a fourth capacitor, wherein a first end of the fourth capacitor is connected to an output end of the second transistor, and a second end of the fourth capacitor is grounded;
a fourth resistor, wherein a first end of the fourth resistor is connected to the output end of the second transistor, and a second end of the fourth resistor is grounded; and
a comparator, wherein a positive electrode of an input end of the comparator is separately connected to the output end of the second transistor, the first end of the fourth resistor, and the first end of the fourth capacitor, a negative electrode of the input end of the comparator is connected to a reference voltage, and an output end of the comparator is connected to the control module.

8. A charging control method, applied to the electronic device according to any one of claims 1 to 4, and comprising:
obtaining a status of a battery; and
sending a charging request message to a charging device, wherein
the charging request message comprises at least one of the following: the status of the battery, voltage requirement information, and current requirement information.

9. The method according to claim 8, wherein before the sending a charging request message to a charging device, the method further comprises:
generating the charging request message based on the status of the battery; and
modulating the charging request message, to obtain the charging request message obtained after direct current conversion; and
the sending a charging request message to a charging device comprises:
sending the charging request message obtained after direct current conversion to the charging device.

10. A charging control method, applied to the charging device according to any one of claims 5 to 7, and comprising:
receiving a charging request message sent by an electronic device; and
regulating an output voltage and/or an output current based on the charging request message, wherein
the charging request message comprises at least one of the following: a status of a battery, voltage requirement information, and current requirement information.

11. The method according to claim 10, wherein the regulating an output voltage and/or an output current based on the charging request message comprises:
parsing the charging request message, to obtain a charging requirement of the electronic device; and
regulating an output voltage and/or an output current based on the charging requirement.

12. A charging control apparatus, comprising:
an obtaining module, configured to obtain a status of a battery; and
an information sending module, configured to send a charging request message to a charging device, wherein
the charging request message comprises at least one of the following: the status of the battery, voltage requirement information, and current requirement information.

13. A charging control apparatus, comprising:
an information receiving module, configured to receive a charging request message sent by an electronic device; and
a processing module, configured to regulate an output voltage and/or an output current based on the charging request message, wherein
the charging request message comprises at least one of the following: a status of a battery, voltage requirement information, and current requirement information.

14. A readable storage medium, wherein the readable storage medium stores a program or instructions, and when the program or the instructions are executed by a processor, the steps of the charging control method according to claim 8 or 9 are implemented, or the steps of the charging control method according to claim 10 or 11 are implemented.

15. A chip, comprising a processor and a communication interface, wherein the communication interface is coupled to the processor, and the processor is configured to run a program or instructions to implement the steps of the charging control method according to claim 8 or 9, or implement the steps of the charging control method according to claim 10 or 11.

16. A computer program product, wherein the program product is stored in a storage medium, and the program product is executed by at least one processor to implement the steps of the charging control method according to claim 8 or 9, or implement the steps of the charging control method according to claim 10 or 11.
